# EUROPEAN PATENT SPECIFICATION

(11) **EP 3 389 923 B1**
(45) Date of publication and mention of the grant of the patent: **22.12.2021**
(21) Application number: 16831915.0
(22) Date of filing: 14.12.2016
(51) Int. Cl.: F16P 3/02

(54) **MACHINING APPARATUS**
BEARBEITUNGSVORRICHTUNG
APPAREIL D'USINAGE

(30) Priority: 16.12.2015 IT UB20159625
(43) Date of publication of application: 24.10.2018
(73) Proprietor: SCM Group S.p.A., 47921 Rimini (RN) (IT)
(72) Inventor: VANNUCCI, Adalberto, 47922 Rimini (IT); GLIELMI, Damiano, 40138 Bologna (IT)
(74) Representative: Villanova, Massimo
(86) International application number: PCT/IB2016/057618
(87) International publication number: WO 2017/103812

(56) References cited:
- EP-A1- 0 435 816
- EP-A1- 0 928 640
- EP-A1- 2 354 624
- EP-A1- 2 628 993
- EP-A2- 2 713 093
- WO-A1-01/48417
- DE-A1- 4 435 156
- DE-U1-202015 004 517

## Description

### Background of the invention

The invention refers to a machining apparatus, in particular for the machining of pieces of wood or material derived from or similar to wood.

Specifically, but not exclusively, the machining apparatus comprises a numerical control machining centre equipped with at least one movable operating head, as for example a multi-function machining centre (drilling, milling, etc), in particular for the machining of panels.

The apparatus in question comprises a safety system to avoid accidents caused by the violent impact of movable elements of the apparatus against an operator in charge of machining in a determined safety area.

The known machining apparatuses, for example the known machining apparatuses for the machining of pieces of wood or material derived from or similar to wood, are generally equipped with a safety system to protect the operator's safety, reducing the risk of a violent impact of a movable element against the operator.

In general, a safety system will have to guarantee that the apparatus works under predetermined safety conditions, in order to, for example, avoid that the impact of a movable element against an operator might happen at a higher speed than a predetermined threshold value, to secure a quick halt of the movable element in the event of an impact against the operator, to intervene even if the operator is bowed, etc.

In particular, reference is made to an apparatus implemented according to the preamble of the first claim. Such an apparatus is known from Patent Publication EP 2 628 993 A1.

Patent Publication EP 2 713 093 A2 discloses a machining apparatus according to the preamble of claim 1 with a safety system with a contactless sensor installed on a contact sensor. Patent Publication EP 2 354 624 A1 discloses a safety system with a bumper placed on a movable element and a number of photocells detecting the presence of an operator in a working area. Patent Publication EP 1 918 629 A2 discloses an apparatus that halts when a contact sensor detects a contact, and that is equipped with a contactless sensor to detect a person or an object approaching, with no need to halt the apparatus. Patent publication EP 2 253 417 A1 describes an apparatus with an ultrasound sensor and an optical barrier sensor.

The safety systems of the prior art can be improved in several aspects.

In the first place, the safety systems of the prior art guarantee their functioning under the desired safety conditions only if the movable element moves at relatively slow speeds. Therefore, an improvement would be providing a safety system allowing to work at relatively high speeds, whilst maintaining the desired safety level.

In the second place it is advisable to provide a safety system with high reliability whilst using a reduced number of sensor elements.

In the third place, it is advisable to implement a safety system with a more reduced dimension compared to the prior art.

### Summary of the invention

An object of the invention is to solve one or more of the aforesaid drawbacks of the safety systems of the prior art.

An advantage is to implement a machining apparatus equipped with a safety system being able to avoid any violent and dangerous impacts of a movable element of the apparatus against the body of an operator attendant at the apparatus.

An advantage is to guarantee the safety of an operator ensuring safety working conditions whilst allowing a relatively high functioning speed of the movable element of the machining apparatus.

An advantage is to provide a highly precise and reliable safety system, so as to allow a relatively high operational speed of the movable element, together with the guarantee to avoid that the movable element itself impacts the body of the operator with a too high impact force.

An advantage is to provide a safety system guaranteeing the safety of the operator with great precision and reliability, in particular regardless of the position of the operator (standing, bowed, lying, etc).

An advantage is to allow the quick and effective assessment of the distance of an operator from the moving element of the machining apparatus.

An advantage is to allow the implementation of a closer control of the pieces being machined in safety conditions.

An advantage is to implement a machining apparatus being able to work with a high safety level, guaranteeing at the same time high machining speeds with a high productivity.

An advantage is to provide a machining apparatus with a safety system constructively simple and cheap.

An advantage is to provide a machining apparatus with a safety system relatively reduced in size.

These and other objects and advantages are achieved by a machining apparatus according to one or more of the claims mentioned hereinafter.

As an example, a machining apparatus comprises a safety system, suitable for avoiding accidents caused by the violent impact of a movable element of the apparatus against an operator, being equipped with sensor means for detecting the presence of an operator in a safety area or working area, wherein the sensor means comprise at least one ultrasonic transducer and at least one acoustic parabolic mirror concentrating ultrasounds in a region extended perpendicularly to a direction of movement of the movable element, for example in a region extended in a longitudinal direction or in a region extended on a plane or a region extended in the space having a minimum dimension as compared to the other two dimensions.

### Brief description of the drawings

The invention shall be better understood and implemented by referring to the enclosed drawings showing non-limiting exemplary embodiments.
Figure 1 is a vertical elevation view of a first embodiment of a machining apparatus implemented according to the invention.
Figure 2 is left side view of Figure 1.
Figure 3 is a vertical elevation view of a second embodiment of a machining apparatus implemented according to the invention.
Figure 4 is a plan view of Figure 3.
Figure 5 is a vertical elevation view of a third embodiment of a machining apparatus implemented according to the invention.
Figure 6 is a plan view of Figure 5.
Figure 7 is a vertical elevation view of a fourth embodiment of a machining apparatus implemented according to the invention.
Figure 8 is a plan view of Figure 7.
Figure 9 is a vertical elevation view of a fifth embodiment of a machining apparatus implemented according to the invention.
Figure 10 is a plan view of Figure 9.
Figure 11 is a vertical elevation view of a sixth embodiment of a machining apparatus implemented according to the invention.
Figure 12 is a plan view of Figure 11.
Figure 13 is a plan view of a seventh embodiment of a machining apparatus implemented according to the invention.
Figure 14 is a perspective view of an eighth embodiment of a machining apparatus implemented according to the invention.
Figure 15 is a vertical elevation view of a ninth embodiment of a machining apparatus implemented according to the invention.
Figure 16 is a plan view of Figure 15.
Figure 17 is a plan view of a tenth embodiment of a machining apparatus implemented according to the invention.
Figure 18 is a side view of a first example of ultrasonic sensor means usable in an apparatus implemented according to the invention.
Figure 19 is a left view of Figure 18.
Figure 20 is a plan view of Figure 18.
Figure 21 is a perspective view of the first example of Figure 18.
Figure 22 is a side view of a second example of ultrasonic sensor means usable in an apparatus implemented according to the invention
Figure 23 is a left view of Figure 22.
Figure 24 is a plan view of Figure 22.
Figure 25 is a perspective view of the second example of Figure 22.
Figure 26 is a side view of a third example of ultrasonic sensor means usable in an apparatus implemented according to the invention
Figure 27 is left view of Figure 26.
Figure 28 is a plan view of Figure 26.
Figure 29 is a perspective view of the third example of Figure 26.

### Detailed description

Referring to the aforesaid drawings, for ease of explanation, similar elements, though belonging to different exemplary embodiments, have been identified with the same reference numbers.

In general, by 1 it is indicated a machining apparatus, in particular for machining pieces of wood, in multilayer wood, in material derived from wood, in material similar to wood, in plastic, in metal, in a combination of the said materials, etc. The workpieces mentioned within the framework of the present description might comprise, for example, plate-shaped pieces. In particular, the machining apparatus 1 may comprise a numerical control working centre (for example of a multifunction type) for the machining of workpieces, for example, in form of panel.

The machining apparatus 1 may comprise at least one movable support 2 being able to perform movements according to one or more axes of movement (for example according to the horizontal axis X of movement). The movable support 2 may be prepared, for example, to support a workpiece machining unit 3, in particular a working unit (e.g., of the prior art type) configured, in a known way (e.g., by means of at least one mandrel), for performing at least one action on a workpiece P being machined, for example for milling, drilling, etc. The machining unit 3 may be configured for performing movements with respect to the movable support 2, e.g., rotations according to one or more rotation axes and/or movements in one or more movement axes (e.g., according to a vertical axis Z and/or according to a horizontal axis Y being perpendicular to axis X of movement of the movable support 2), following the command of activation means.

In particular, the machining unit 3 may comprise a CNC unit. The machining unit 3 may comprise, for example, at least one machining tool. The machining tool may be installed, for example, by means of a changing tool system. The machining unit 3 may perform various machining operations on a workpiece. The movable support 2 may support two or more distinct and/or independent machining units 3.

In particular, the machining apparatus 1 may include support means 4 for supporting at least one workpiece P being machined, as in the embodiments of Figures from 1 to 17. The machining unit 3 shall be placed in such a way as to machine at least one workpiece P supported by the support means 4. The support means 4 may include, as in the embodiments of Figures from 1 to 17, a supporting (horizontal) surface. The support means 4 may comprise, as in the embodiments of Figures from 1 to 17, a base being extended in a longitudinal direction (e.g., in a longitudinal direction parallel to the axis X of movement). The support means 4 (e.g., of the prior art type) may be suitable for supporting at least one panel. The support means 4 (horizontal flat surface) may be equipped with means (of the prior art type) for blocking the position of workpiece P. The support means 4 may comprise, for example, a plurality of crossbeams, being parallel to one another, on which the workpiece P may be positioned.

In certain cases, the support means 4 may be movable (commanded by driving means, e.g., of the prior art) to allow the movement of the workpiece, for example, with respect to the machining unit 3.

The machining apparatus 1 may comprise at least one movable element that may operate in a determined safety area where an operator may enter. In particular, the movable element represents the element that may impact in a dangerous way an operator entered in the safety area. In these embodiments, the movable element comprises the movable support 2, though it is possible to envisage that the movable element comprises other elements, for example the workpiece support means. In particular, the movable element may be moved according to at least one direction of movement (corresponding in this case to the movement axis X). Such direction of movement (axis X) may be, for example, horizontal. Such direction of movement (axis X) may be, for example, parallel to the longitudinal direction of the base extension.

As already mentioned, in the embodiments of Figures from 1 to 17, the movable element, that may represent a danger for the safety of an operator in the safety area, comprises the movable support 2, even though, as previously stated, it is possible to envisage that the movable elements to be handled in safety are others.

In particular, the machining apparatus 1 may comprise sensor means 5 suitable to detect the presence of objects and/or people (in particular an operator involved in the machining) in the safety area.

The sensor means 5 may comprise, as in the specific embodiments herein illustrated, emitting and receiving means 6 arranged for emitting at least one radiation (wave) and/or receiving a possible return radiation (wave) being generated from objects and/or people present in the safety area.

In particular, the machining apparatus 1 may comprise control means (for example programmable electronic means) configured to reduce the speed of the movable element (namely the element representing a danger for the operator) in response to a signal emitted by the above-mentioned sensor means 5.

In particular, the sensor means 5 may be configured, in such a way as to emit radiations following a direction of maximum radiation transverse to a direction of movement (axis X) of the movable element representing a danger for the operator present in the safety area. In particular, the direction of maximum radiation may be a direction wherein the emission and/or reception of the emitting and receiving means 6 is greater than any other direction. In particular, the direction of maximum radiation may have at least a horizontal component and/or at least a vertical component.

The emitting and receiving means may be configured, as in these examples, to emit and receive at least a mechanical wave. In particular, the emitting and receiving means may comprise ultrasonic transducer means (e.g., at least one piezoelectric transducer).

In particular, the sensor means 5 may comprise guide means 7 arranged for increasing the directivity of a radiation emitted by the emitting and receiving means 6. In particular, the guide means 7 may be configured to reduce a main lobe of directivity of a radiation emitted by the emitting and receiving means 6. In particular, the guide means 7 may comprise acoustic transforming means, e.g., of the horn type (in this specific case in form of tubular body).

In particular, the sensor means 5 may comprise reflecting means 8 arranged to reflect a radiation/wave emitted by emitting and receiving sensors 6 to reflect a possible return radiation/wave. In particular, the reflecting means 8 may comprise specular reflecting means, i.e., able to provide a specular reflection of the incidence radiation. In particular, the specular reflecting means 8 may comprise at least a smooth (metal) surface.

In particular, the guide means 7 may be arranged to address a radiation/wave emitted by the emitting and receiving means 6 towards the reflecting means 8.

Specifically, the reflective means 8 may be arranged on the movable element (in this specific case the movable support 2) that may represent a danger for the operator entering the safety area.

The reflecting means 8 may comprise, as in these examples, concave reflecting means to converge the reflected radiation/wave. The reflective means 8 allows to focus the radiation/wave into a pre-established region.

In particular, the reflective means 8 may comprise parabolic reflecting means, as in the specific examples herein described. In particular, the emitting and receiving means 6 may be arranged in a focus of the reflecting means 8 (parabolic). Specifically, the reflective means 8 may be of the offset type. In this specific case, the reflecting means 8 comprises a (specular) reflecting surface having the shape of a portion of paraboloid. However, it is possible to envisage the use of reflecting means comprising a (specular) reflecting surface having a different shape, for example, the shape of a portion of sphere, or of a portion of ellipsoid, or of a portion of a hyperboloid, or of a portion of a square surface, or of a portion of a ruled surface, or of a portion of a rotation surface. It is also possible to envisage the use of reflecting means of any shape suitable to function as an acoustic horn, i.e. of transforming means to transform acoustic energy with high pressure and/or low speed into acoustic energy with low pressure and/or high speed.

For example, the parabolic reflecting means 8 may have at least one parabolic axis that is transverse to the direction of movement (axis X) of the movable element (support 2). In particular, such parabolic axis may be orthogonal to the above mentioned direction of movement (axis of movement X).

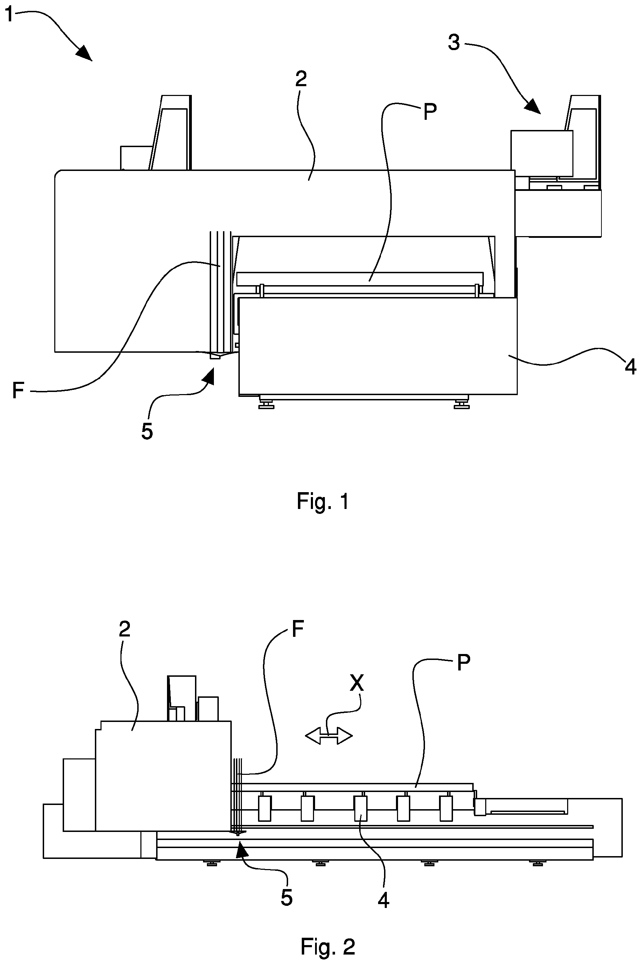

In the example of Figures 1 and 2, the emitting and receiving means 6 comprises a source (basically point-shaped) of radiations, for example (at least) one ultrasound piezoelectric transducer. The reflecting means 8 may comprise a parabolic mirror arranged with the vertical parabolic axis. The radiations emitted by the transducer are reflected and focused by the parabolic mirror in a radiation beam F heading upwards (as shown in Figures 1 and 2). The system transducer/mirror of emission/reception used in Figures 1 and 2 may comprise, for example, the system illustrated in Figures from 18 to 21 or the one illustrated in Figures from 22 to 25, duly oriented to address a beam F of radiations upwards. The ultrasonic transducer is arranged in the focus of the parabola. The system is of the offset type.

In the example of Figures 1 and 2, the sensors means 5 comprises a single transducer/mirror system arranged on the movable element (on the movable support 2 supporting the machining unit 3) in such a way that a single beam F of ultrasonic radiations is ascending (oriented from the bottom-up) and placed near the workpiece supporting surface, even though it is possible to envisage other orientations and/or positions.

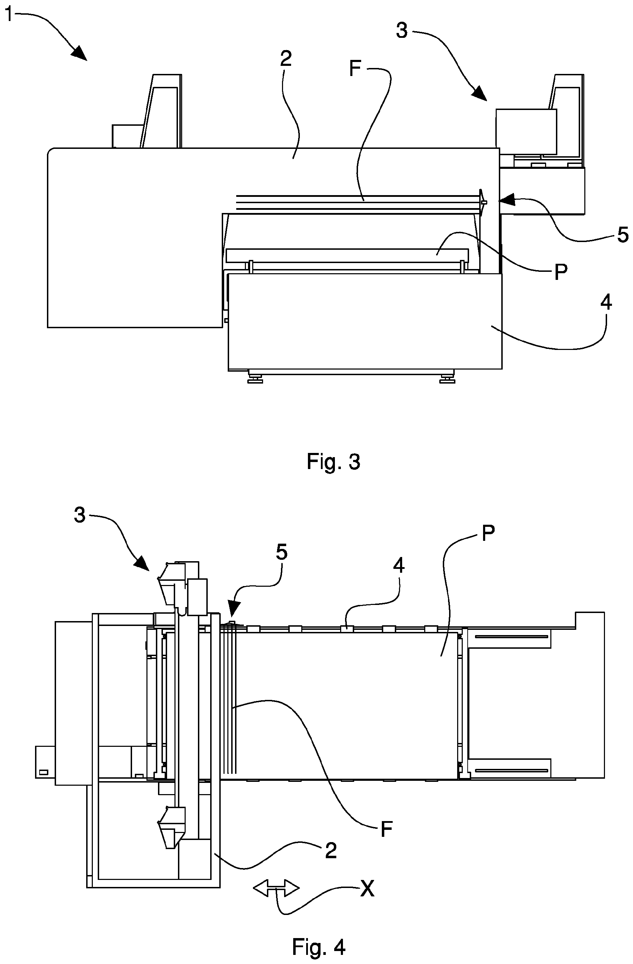

In the example of Figures 3 and 4, the sensors means 5 comprises a single transducer/mirror system arranged on the movable element (on the movable support 2 supporting machining unit 3) in such a way to concentrate a beam F of ultrasonic radiations in a horizontal direction above the workpiece supporting surface.

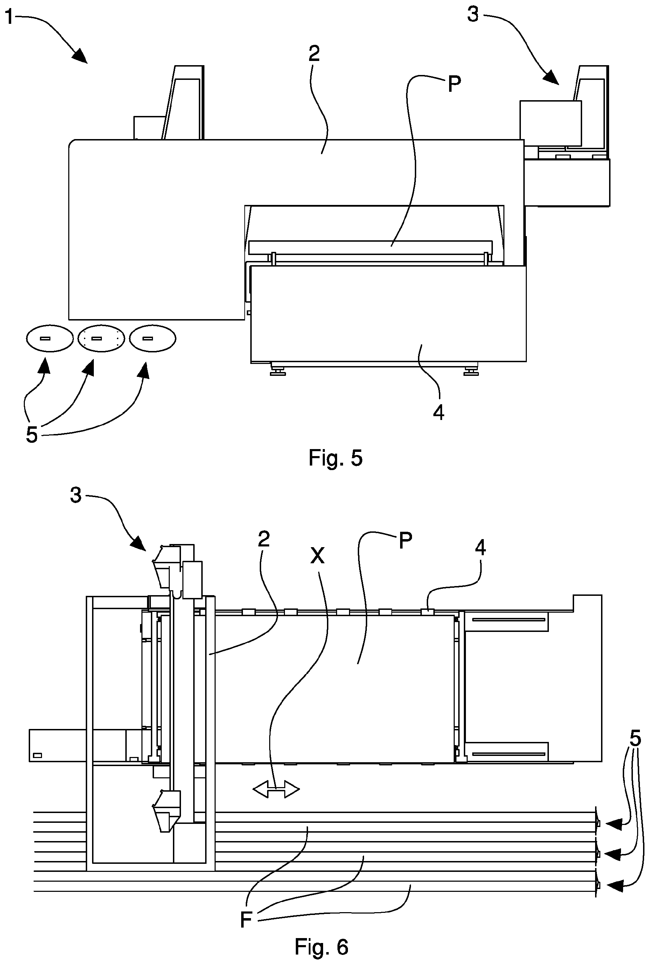

In the example of Figures 5 and 6, the sensor means 5 comprises a plurality of transducer/mirror couples arranged one next to the other in a fixed position so as to generate more ultrasonic radiation beams F being parallel in a horizontal direction, parallel to the direction of movement (axis X) of the movable element, at a height lower than the working surface (workpiece supporting surface). In this case, too, it is possible to envisage other orientations and/or positions.

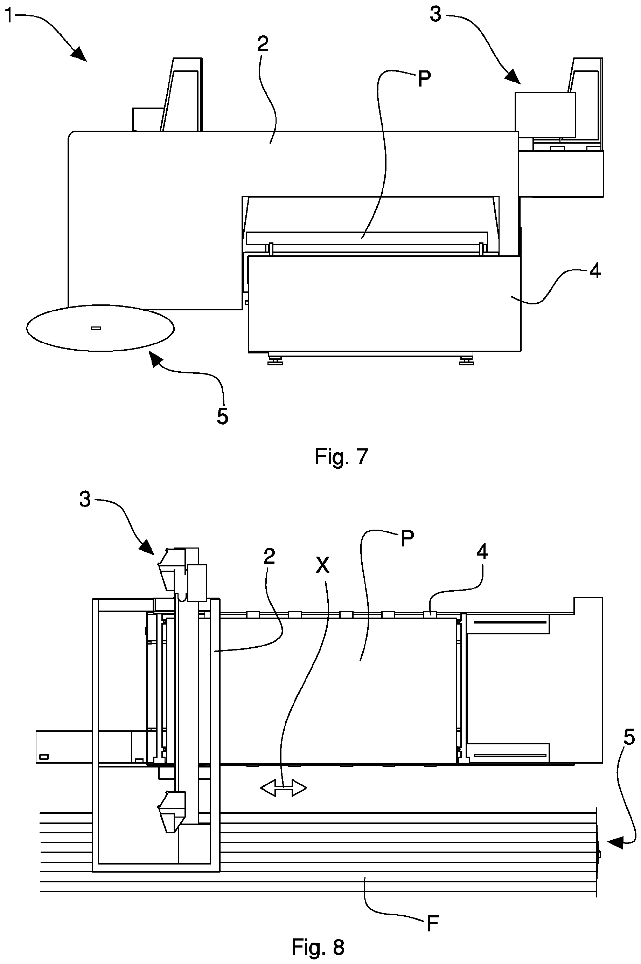

In the example of Figures 7 and 8, the sensor means 5 comprises a single transducer/mirror system arranged in a fixed position (in this case not installed on the movable element), with a reflecting surface of relatively high dimensions, in order to generate a (larger) single beam F of ultrasonic radiations in a horizontal direction being at a height lower than the working surface (workpiece supporting surface). In this case, too, it is possible to envisage other orientations and/or positions.

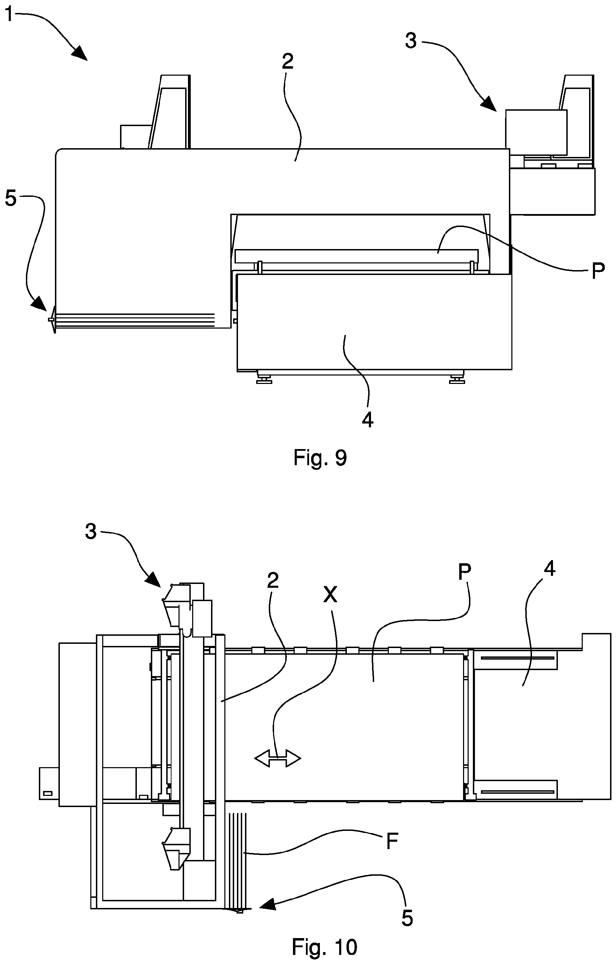

In the example of Figures 9 and 10, the sensor means 5 comprises a single transducer/mirror system arranged on the movable element (on the movable support 2 supporting machining unit 3) so as to focus the beam F of ultrasonic radiations in a horizontal direction (oriented towards the workpiece supporting surface) at a height lower than the working surface (workpiece supporting surface). In this case, too, it is possible to envisage other orientations and/or positions.

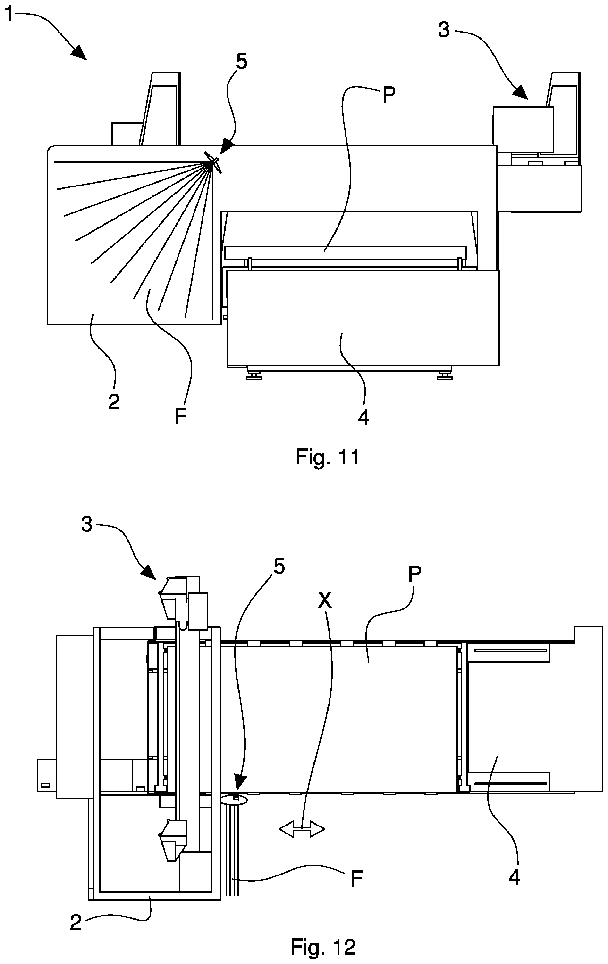

In the example of Figures 11 and 12, the sensor means 5 comprises a single transducer/mirror system arranged on the movable element (in this case on the movable support 2 supporting the machining unit) so as to generate an angular beam F (in this case with an angle of 90°) of radiations arranged on a plane or on a planar region of space, i.e., a region having a dimension (thickness) being minimum as compared to the other two dimensions (width and length). In this case, too, it is possible to envisage other orientations and/or positions or other angle widths of beam F.

For example, the transducer/mirror system of emission and reception embodied in the example of Figures 11 and 12 may comprise the system illustrated in Figures from 23 to 26, oriented to address the radiations beam F on a plane (or planar region of space) being arranged (vertically) perpendicular to the direction of movement X.

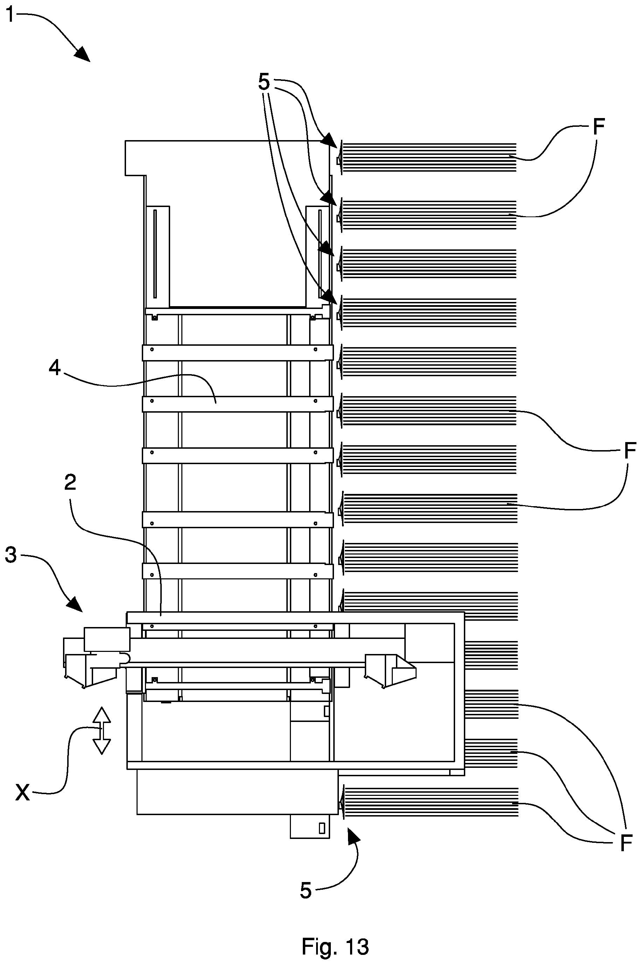

In the example of Figure 13, the sensor means 5 comprises a plurality of transducer/mirror couples arranged one next to the other in a fixed position so as to generate more ultrasonic radiations beams F being parallel in a horizontal direction, perpendicular to the direction of movement X of the movable element, at a height lower than the working surface (workpiece supporting surface).

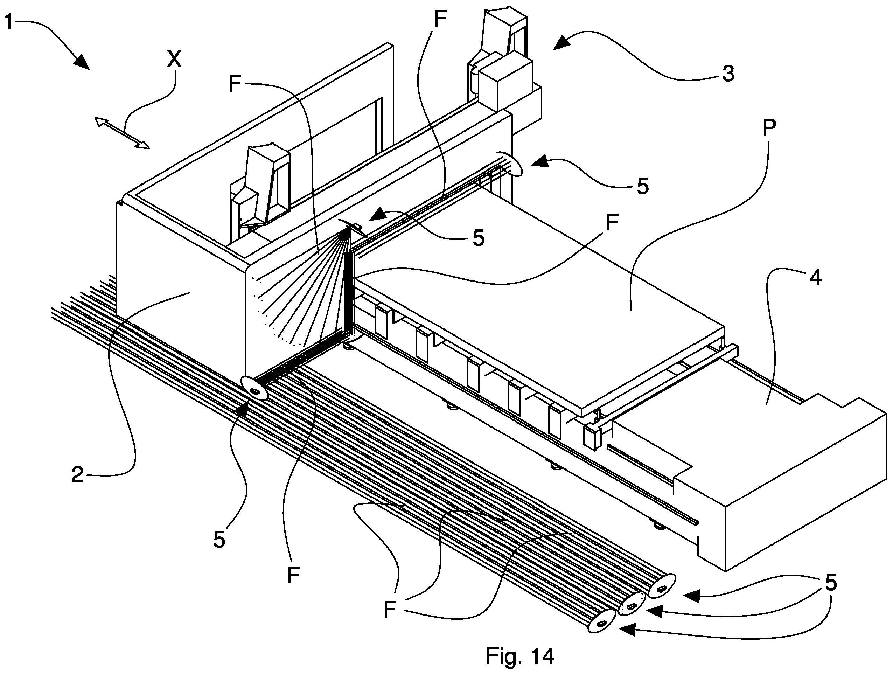

In the example of Figure 14, the sensor means 5 comprises a combination of previously illustrated transducer/mirror systems. Obviously, it is possible to apply any combination of transducer/mirror systems, with other orientations and/or positions or other angle widths of the concentrated radiations beam.

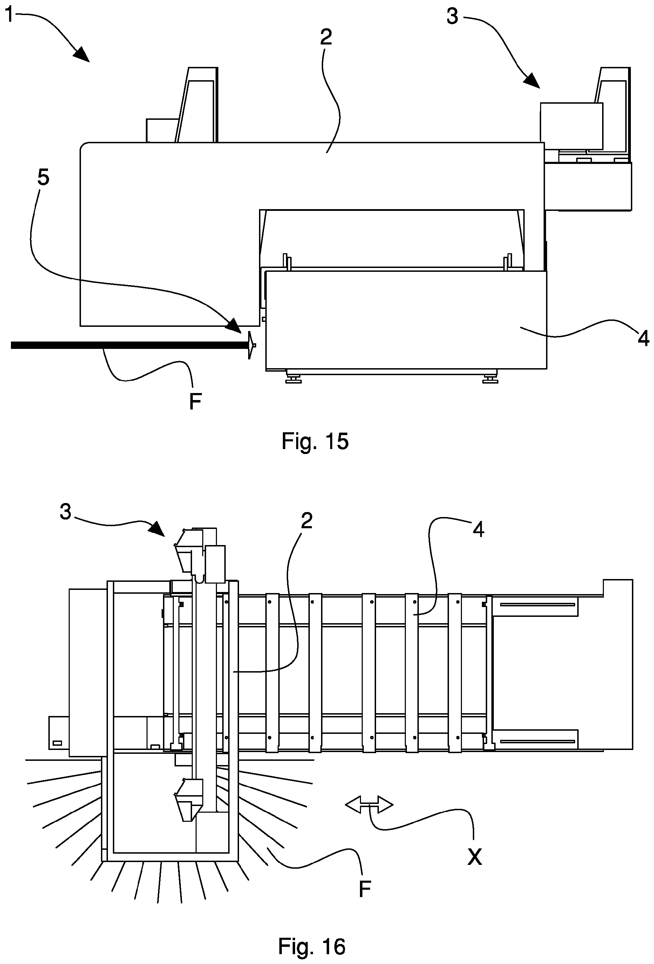

In the example of Figures 15 and 16, the sensor means 5 comprises a single transducer/mirror system arranged on the movable element (in this case on the movable support 2 supporting the machining unit 3) in order to generate an angular beam F (in this case with an angle of 180°) of radiations arranged horizontally, on a plane or on a planar region of space, i.e., a region having a dimension (thickness) being minimum as compared to the other two dimensions (width and length). In this case, too, it is possible to envisage other orientations and/or positions or other angle widths of beam F. In this specific case, the transducer/mirror system is arranged (solidly installed) on a lower side of the movable element.

For example, the transducer/mirror system of emission/reception embodied in the example of Figures 15 and 16 may comprise a system similar to the one illustrated in Figures from 26 to 29, but wherein the reflecting portion is divided in order to generate an angular beam F having a width of 180°, rather than of 90°. The radiation beam F is directed towards a plane (or planar region of space) arranged horizontally.

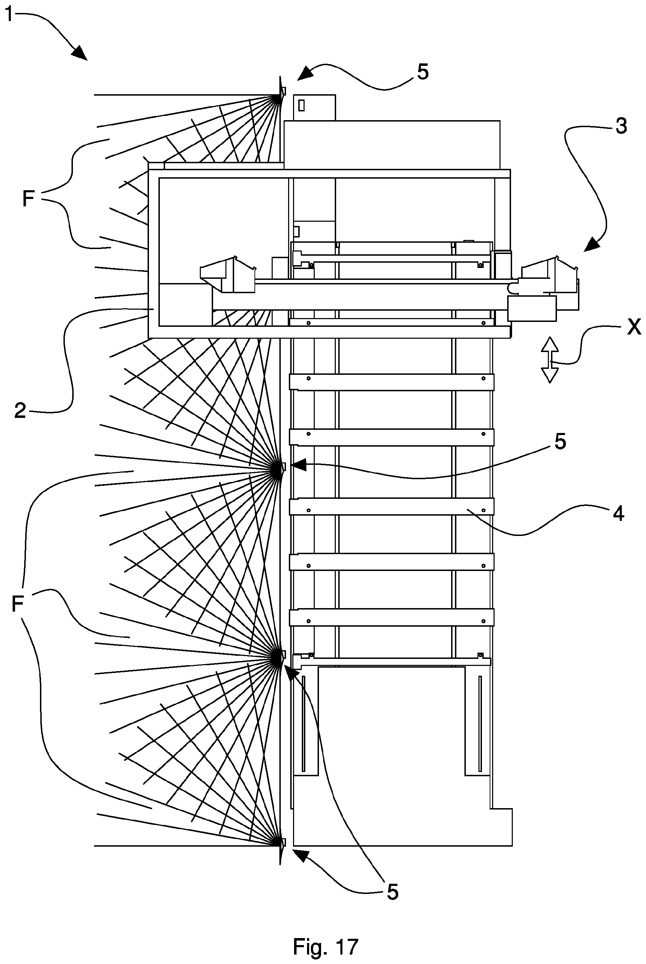

In the example of Figure 17, the sensor means 5 comprises a plurality of transducer/mirror couples arranged one next to the other in a fixed position so as to generate a series of ultrasonic radiations angular beams F (in this case the two end beams having angles of 90° and the other intermediate beams having angles of 180°) arranged on the same plane or planar region of space, at a height lower than working surface one (workpiece supporting surface).

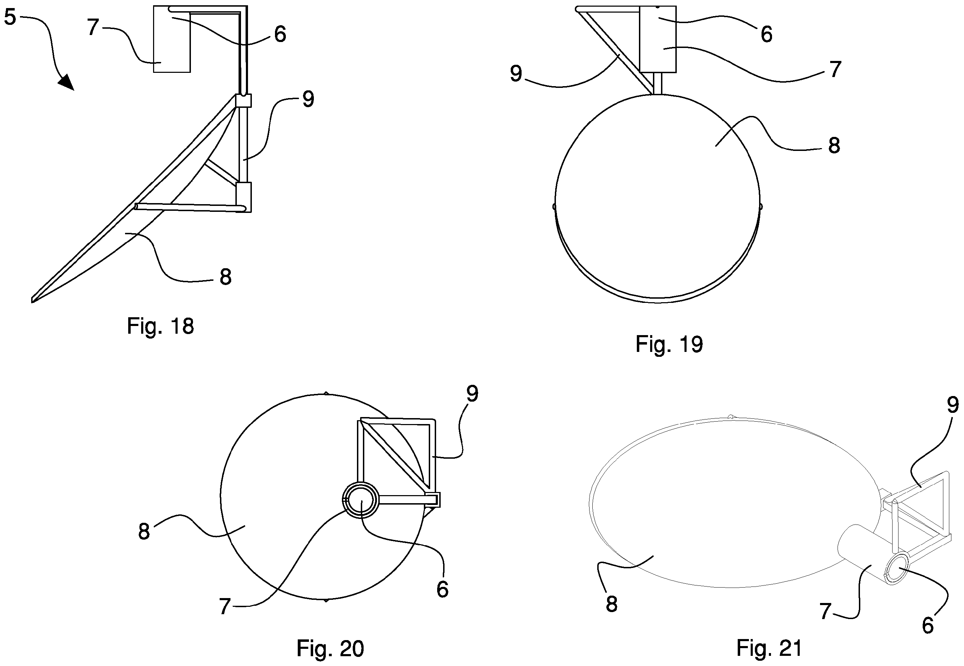

The transducer/mirror system of Figures 18-21 comprises a frame 9 supporting the reflecting means 8, guide means 7, and emitting and receiving means 6. In this example, the reflecting means 8 comprises a sectioned portion of a parabolic mirror. The reflecting means 8 are of the offset type. The reflecting surface may comprise, as in the present case, a portion of a (circular) revolution paraboloid obtained by rotating a parabola around its own axis, so that the geometry of the reflecting surface comprises unlimited parabolas having in common the same parabolic axis, such that the radiations emitted from the emitting and receiving means 6, arranged in the focus of the paraboloid, are reflected, all converging in the same direction.

The emitting and receiving means 6 comprises an (ultrasonic) transducer. The guide means 6 comprises an acoustic horn. The transducer is located inside a tubular (cylindrical) structure serving as acoustic horn. The (ultrasonic) transducer and the acoustic horn are positioned in such a way that the radiation resulting from the transducer/mirror system is basically the same as the radiation emitted from a point-shaped source arranged in the focus of the paraboloid. Substantially, the transducer/horn system is configured and arranged in order to function as a radiation source located in the focus of the mirror. In other words, the transducer/horn system corresponds to a point-shaped source arranged in the focus. For example, the transducer/horn system configuration may be carried out in an empirical way, by positioning the system until the configuration equivalent to a point-shaped source in the focus is found.

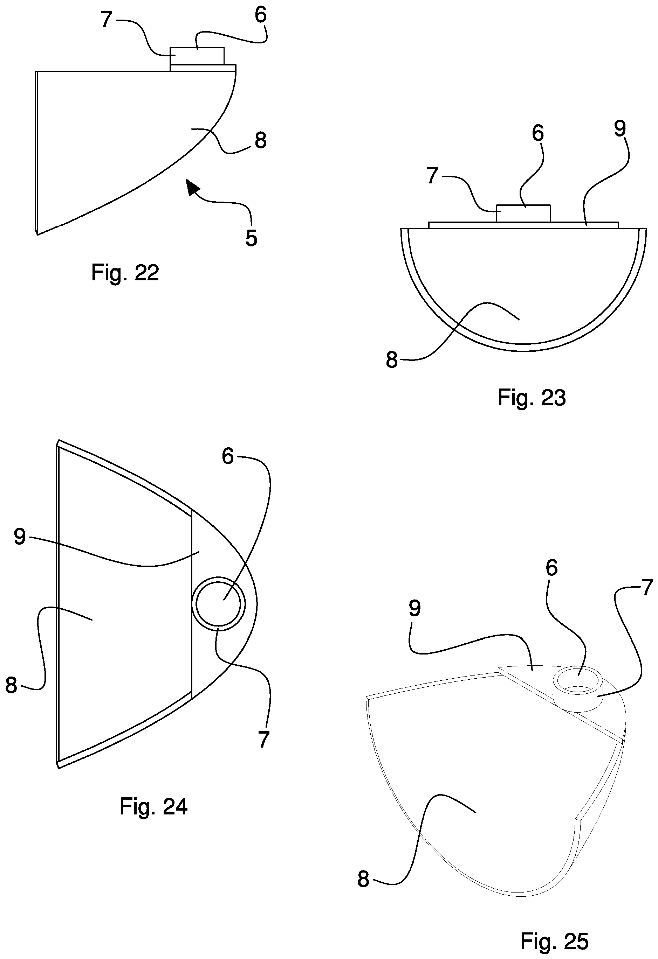

In the transducer/horn system of Figures 22-25 the sectioned portion of the parabolic (acoustic) mirror has a different shape as compared to the example of Figures 18-21. In this example, too, the reflecting surface may comprise a portion (sectioned differently) of a (circular) revolution paraboloid. As in the preceding example, the transducer/horn system is configured and arranged in order to be equivalent to a point-shaped source arranged in the focus of the paraboloid.

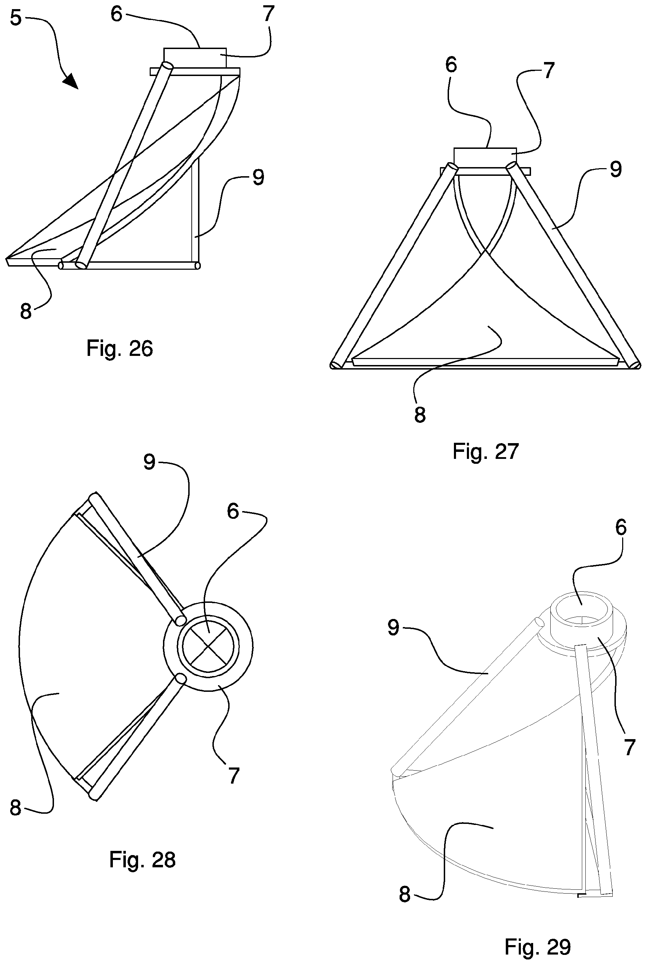

In the transducer/mirror system of Figures 26-29 (being used for example to give shape to an angular radiation beam F as the one of Figures 11 and 12), the reflecting means 8 comprises a parabolic (acoustic) mirror having a reflecting surface being a portion of a revolution surface obtained by rotating a parabola around a rotation axis, being parallel to the directrix of the parabola (passing through the focus of the parabola). Substantially, the geometry of the reflecting surface comprises endless parabolas arranged one next to the other, having in common the focus, and the parabolic axes being coplanar the ones next to the others. The radiations reflected from the (endless) parabolas form an angular beam F contained in a flat region of space whose minimum dimension depends on a mirror dimension (being substantially equal to a mirror dimension). The beam F has an angular width that depends on the rotation angle used to section the mirror portion. In this specific case, the portion has been sectioned (basically in the shape of a triangle) to form a radiation beam F with an angle of 90°, even though it is possible to divide a portion apt to form radiation beams with different angles, for example of about 30°, 45°, 60°, 120°, 135°, 150°, 180°, 240°, 300°, 360°, etc. The reflecting surface of Figures 26-29 is configured to reflect the radiations emitted by the emitting and receiving means 6, so that the reflected radiations form a beam F contained in a plane or in a planar region of space, i.e., a region of space having a minimum dimension (thickness) as compared to the other two dimensions (width and length). As already said, such minimum dimension basically corresponds to a sectioned portion of the mirror.

In the specific examples herein described, the emitting and receiving means 6 comprises emitting and receiving means of sound mechanical waves (in particular ultrasounds), even if it is possible to envisage the use of other emitting and receiving means, for example, in particular emitting and receiving means of electromagnetic waves, emitting and receiving means of radio waves, capacitive sensor means, infrared sensor means, laser sensor means, radar sensor means, etc.

As it has been previously described (examples in Figures 1-4 and 9-13), the emitting and receiving means 6 (e.g., with ultrasonic transducer(s)) may be configured so as to define at least one main region of directivity of the radiation being oriented transversely to the direction of movement (axis X) of the movable element. Such region may comprise, for example, a directivity lobe with a longitudinal axis that is transverse to the direction of movement (as in the examples of Figures 1-4, 9, 10 and 13) or a flat region of directivity being positioned transverse to the direction of movement (as in the example of Figures 11-12). In this description it is understood that the directivity of a radiation source in a given region (direction or plane) may be defined as the ratio between the intensity of radiation irradiated in such region (direction or plane) and the total power (irradiated in all regions, directions or planes). The term directivity may also mean the maximum value of such function in relation to a maximum region (direction or plane), i.e., of a region of space (direction or plane) with maximum emission or reception.

The sensor means 5 used herein (emitting and receiving means of the radiation/wave 6 in potential combination with the reflecting means 8 and/or with the guide means 7) may define, in particular, a maximum direction and/or plane where there is the maximum level of radiation emission and reception. The above-mentioned maximum direction and/or plane may be transverse to the direction of movement (axis X) of the movable element.

As shown above, in particular, the reflecting (parabolic) means 8 used herein may be arranged to reflect a beam of waves F with an axis being transversal (perpendicular) to the direction of movement (axis X) of the movable element.

In particular, the reflecting means 8 used herein may comprise specular reflecting means (for example acoustic reflection means, in particular with a metallic shiny reflecting surface).

When the operator who has entered the safety area is hit by a wave/radiation emitted by the emitting and receiving means 6 (and guided by the guide means 7 and/or reflected by the reflecting means 8) a return wave/radiation is generated, this reaching (in a determined time of flight) the emitting and receiving means 6, thus indicating a presence in the safety area. The return wave/radiation may be reflected by the reflecting means 8 before going back to the emitting and receiving means 6.

The above-described sensor means 5 may be able to detect the distance between the sensor means themselves and the object/person detected in the safety area. For example, this is possible by using the time of flight of the wave/radiation emitted and of the return wave/radiation received. In particular, the above-described sensor means 5 may be able to detect in real time the exact position of the object/person detected in the safety area. Having knowledge of the distance and/or position of the detected object/person allows to regulate the speed of the movable element (support 2) in order to maintain an acceptable safety condition even with a functioning speed not too much reduced, thus improving the productivity of the machining apparatus 1 without being to the detriment of safety.

In examples not shown, the machining apparatus 1 may comprise additional sensor means (e.g., an optical barrier, in particular of the photocell type) in order to detect objects and/or people within the safety area.

The machining apparatus 1 therefore comprises a safety system being able to avoid violent and dangerous impacts of the movable element against the body of an operator, guaranteeing its functioning under safety conditions, though at a relatively high functioning speed. The safety system can guarantee the safety of an operator regardless of his position (standing, bowed, lying).

## Claims

1. Machining apparatus (1) comprising:
- support means (4) for supporting at least one workpiece (P) being machined;
- at least one machining unit (3) for machining at least one workpiece (P) supported by said support means (4);
- sensor means (5) arranged on a movable element (2) of said machining apparatus (1) to detect objects and/or people present in a safety area, said sensor means (5) being movable together with said movable element (2) in a movement direction (X), said sensor means (5) comprising emitting and receiving means (6) arranged to emit at least one radiation and to receive a possible return radiation reflected from objects and/or people present in said safety area, said emitting and receiving means (6) being configured for emission and reception of at least one mechanical wave;
**characterized by** comprising:
- reflecting means (8) arranged to reflect the radiation emitted by said emitting and receiving means (6) and/or the possible return radiation, said reflecting means (8) being configured so that a reflected radiation beam (F) is concentrated in a flat region of space having a minimum dimension than the other two, said flat region being transverse to said movement direction (X), said reflecting means (8) being arranged on said movable element (2);
- guide means (7) arranged to increase the directivity of the radiation emitted by said emitting and receiving means (6), said guide means (7) comprising acoustic transforming means, said guide means (7) being arranged to direct a radiation emitted by said emitting and receiving means (6) towards said reflecting means (8).

2. Apparatus according to claim 1, wherein said reflecting means (8) is configured for converging the radiation into a beam (F) oriented in at least one direction transverse to said movement direction (X).

3. Apparatus according to any one of the preceding claims, wherein said reflecting means (8) comprises at least one reflecting surface which has the shape of a portion of a revolution surface obtained by rotating a parabola around an axis passing through the focus of the parabola and parallel to the directrix of the parabola.

4. Apparatus according to any one of the preceding claims, wherein said acoustic transforming means is of the acoustic horn type.

5. Apparatus according to any one of the preceding claims, said sensor means (5) being configured so that the intensity of the radiation in at least one direction transverse to said movement direction (X) is greater than the intensity of the radiation in said movement direction (X).

6. Apparatus according to any one of the preceding claims, said reflecting means (8) comprising specular reflecting means (8).

7. Apparatus according to any one of the preceding claims, said flat region being perpendicular to said movement direction (X).

8. Apparatus according to any one of the preceding claims, wherein said mechanical wave is directed with a main lobe of directivity that is transverse to said movement direction (X).

9. Apparatus according to any one of the preceding claims, comprising control means configured to reduce the speed of said movable element (2) in response to a signal emitted by said sensor means (5).

10. Apparatus according to any one of the preceding claims, wherein said emitting and receiving means (6) is configured for emission and reception of at least one acoustic mechanical wave.

## Patentansprüche

1. Bearbeitungsvorrichtung (1), aufweisend:
- Tragmittel (4) zum Tragen wenigstens eines zu bearbeitenden Werkstücks (P);
- wenigstens eine Bearbeitungseinheit (3) zum Bearbeiten wenigstens eines Werkstücks (P), das von dem Tragmittel (4) getragen ist;
- eine Sensoreinrichtung (5), die an einem beweglichen Element (2) der Bearbeitungsvorrichtung (1) angeordnet ist, um Objekte und/oder Personen zu erfassen, die sich in einem Sicherheitsbereich befinden, wobei die Sensoreinrichtung (5) zusammen mit dem beweglichen Element (2) in einer Bewegungsrichtung (X) bewegbar ist, wobei die Sensoreinrichtung (5) Sende- und Empfangsmittel (6) umfasst, die derart angeordnet sind, dass sie wenigstens eine Strahlung aussenden und eine mögliche Rückstrahlung empfangen, die von Objekten und/oder Personen reflektiert wird, die sich in dem Sicherheitsbereich befinden, wobei die Sende- und Empfangsmittel (6) zum Aussenden und Empfangen von wenigstens einer mechanischen Welle konfiguriert sind;
**dadurch gekennzeichnet, dass** sie aufweist:
- eine Reflexionseinrichtung (8), die derart angeordnet ist, dass sie die von den Sende- und Empfangsmitteln (6) emittierte Strahlung und/oder die mögliche Rückstrahlung reflektiert, wobei die Reflexionseinrichtung (8) derart konfiguriert ist, dass ein reflektierter Strahlungsbündelstrahl (F) in einem flachen Bereich des Raums konzentriert ist, der eine minimale Abmessung gegenüber den anderen beiden hat, wobei der flache Bereich transversal zu der Bewegungsrichtung (X) ist, und wobei die Reflexionseinrichtung (8) an dem beweglichen Element (2) angeordnet ist;
- eine Leiteinrichtung (7), die angeordnet ist, um die Richtwirkung der von den Sende- und Empfangsmitteln (6) emittierten Strahlung zu erhöhen, wobei die Leiteinrichtung (7) akustische Wandlermittel umfasst, wobei die Leiteinrichtung (7) angeordnet ist, um eine von den Sende- und Empfangsmitteln (6) emittierte Strahlung in Richtung der Reflexionseinrichtung (8) zu lenken.

2. Vorrichtung nach Anspruch 1, wobei die Reflexionseinrichtung (8) ausgestaltet ist, um die Strahlung in einem Strahl (F) konvergieren zu lassen, der in wenigstens eine Richtung, transversal zu der Bewegungsrichtung (X) orientiert ist.

3. Vorrichtung nach einem der vorstehenden Ansprüche, wobei die Reflexionseinrichtung (8) wenigstens eine reflektierende Oberfläche umfasst, welche die Gestalt eines Teils einer Rotationsfläche hat, die erzielt wird durch Drehen einer Parabel um eine Achse, welche durch den Fokus der Parabel führt und parallel zu der Leitkurve der Parabel.

4. Vorrichtung nach einem der vorstehenden Ansprüche, wobei das akustische Wandlermittel vom Typ eines akustischen Horns ist.

5. Vorrichtung nach einem der vorstehenden Ansprüche, wobei die Sensoreinrichtung (5) derart ausgestaltet ist, dass die Intensität der Strahlung in wenigstens einer Richtung, transversal zur Bewegungsrichtung (X), größer ist als die Intensität der Strahlung in der Bewegungsrichtung (X).

6. Vorrichtung nach einem der vorstehenden Ansprüche, wobei die Reflexionseinrichtung (8) spiegelartige Reflexionsmittel (8) umfasst.

7. Vorrichtung nach einem der vorstehenden Ansprüche, wobei der flache Bereich senkrecht zu der Bewegungsrichtung (X) ist.

8. Vorrichtung nach einem der vorstehenden Ansprüche, wobei die mechanische Welle so ausgerichtet ist, dass eine Hauptkeule der Richtwirkung transversal zu der Bewegungsrichtung (X) ist.

9. Vorrichtung nach einem der vorstehenden Ansprüche, umfassend Steuermittel, die ausgestaltet sind zum Reduzieren der Geschwindigkeit des beweglichen Elements (2) in Reaktion auf ein von der Sensoreinrichtung (5) emittiertes Signal.

10. Vorrichtung nach einem der vorstehenden Ansprüche, wobei das Sende- und Empfangsmittel (6) ausgestaltet ist zum Senden und Empfangen wenigstens einer akustischen, mechanischen Welle.

## Revendications

1. Appareil d'usinage (1) comprenant :
- des moyens de support (4) pour supporter au moins une pièce à traiter (P) qui est en cours d'usinage ;
- au moins une unité d'usinage (3) pour usiner au moins une pièce à traiter (P) supportée par lesdits moyens de support (4) ;
- des moyens capteurs (5) agencés sur un élément mobile (2) dudit appareil d'usinage (1) pour détecter des objets et/ou des personnes présents dans une zone de sécurité, lesdits moyens capteurs (5) étant mobiles conjointement avec ledit élément mobile (2) dans une direction de déplacement (X), lesdits moyens capteurs (5) comprenant des moyens émetteurs et récepteurs (6) agencés pour émettre au moins un rayonnement et pour recevoir un éventuel rayonnement de retour réfléchi depuis des objets et/ou des personnes présents dans ladite zone de sécurité, lesdits moyens émetteurs et récepteurs (6) étant configurés pour l'émission et la réception d'au moins une onde mécanique ;
**caractérisé en ce qu'**il comprend :
- des moyens réfléchissants (8) agencés pour réfléchir le rayonnement émis par lesdits moyens émetteurs et récepteurs (6) et/ou l'éventuel rayonnement de retour, lesdits moyens réfléchissants (8) étant configurés de telle sorte qu'un faisceau de rayonnement réfléchi (F) soit concentré dans une zone d'espace plate ayant une dimension minimum comparée aux deux autres, ladite zone plate étant transversale par rapport à ladite direction de déplacement (X), lesdits moyens réfléchissants (8) étant agencés sur ledit élément mobile (2) ;
- des moyens de guidage (7) agencés pour augmenter la directivité du rayonnement émis par lesdits moyens émetteurs et récepteurs (6), lesdits moyens de guidage (7) comprenant des moyens de transformation acoustiques, lesdits moyens de guidage (7) étant agencés pour diriger un rayonnement émis par lesdits moyens émetteurs et récepteurs (6) vers lesdits moyens réfléchissants (8).

2. Appareil selon la revendication 1, dans lequel lesdits moyens réfléchissants (8) sont configurés pour faire converger le rayonnement en un faisceau (F) orienté dans au moins une direction transversale par rapport à la direction de déplacement (X).

3. Appareil selon l'une quelconque des revendications précédentes, dans lequel lesdits moyens réfléchissants (8) comprennent au moins une surface réfléchissante qui a la forme d'une partie d'une surface de révolution obtenue par rotation d'une parabole autour d'un axe passant à travers le foyer de la parabole et parallèle à la directrice de la parabole.

4. Appareil selon l'une quelconque des revendications précédentes, dans lequel lesdits moyens de transformation sont du type pavillon acoustique.

5. Appareil selon l'une quelconque des revendications précédentes, dans lequel lesdits moyens capteurs (5) étant configurés de sorte que l'intensité du rayonnement dans au moins une direction transversale par rapport à ladite direction de déplacement (X) soit plus grande que l'intensité du rayonnement dans ladite direction de déplacement (X).

6. Appareil selon l'une quelconque des revendications précédentes, dans lequel lesdits moyens réfléchissants (8) comprenant des moyens réfléchissants (8) spéculaires.

7. Appareil selon l'une quelconque des revendications précédentes, dans lequel ladite zone plate étant perpendiculaire à ladite direction de déplacement (X).

8. Appareil selon l'une quelconque des revendications précédentes, dans lequel ladite onde mécanique est dirigée avec un lobe de directivité principal qui est transversal par rapport à ladite direction de déplacement (X).

9. Appareil selon l'une quelconque des revendications précédentes, comprenant des moyens de commande configurés pour réduire la vitesse dudit élément mobile (2) en réponse à un signal émis par lesdits moyens détecteurs (5).

10. Appareil selon l'une quelconque des revendications précédentes, dans lequel lesdits moyens émetteurs et récepteurs (6) sont configurés pour l'émission et la réception d'au moins une onde mécanique acoustique.
